# EUROPEAN PATENT SPECIFICATION

(11) **EP 0 762 983 B1**
(45) Date of publication and mention of the grant of the patent: **04.03.1998**
(21) Application number: 94927861.8
(22) Date of filing: 11.08.1994
(51) Int. Cl.: B65G 21/18, B65G 17/40

(54) **SPIRAL CONVEYOR**
WENDELFÖRMIGER FÖRDERER
CONVOYEUR EN SPIRALE

(30) Priority: 11.08.1993 NL 9301395
(43) Date of publication of application: 19.03.1997
(73) Proprietor: GEBR. VAN CAPELLEVEEN B.V., NL-3972 NE Driebergen (NL)
(72) Inventor: VAN CAPELLEVEEN, Pieter, NL-3921 DG Elst (NL)
(74) Representative: Smulders, Theodorus A.H.J., Ir.
(86) International application number: NL9400190
(87) International publication number: WO9504693

(56) References cited:
- EP-A- 0 333 565
- EP-A- 0 488 702
- DE-A- 2 655 381
- NL-A- 9 101 059
- US-A- 3 237 756

## Description

This invention relates to a conveyor according to the preamble of claim 1.

Such an apparatus is disclosed in DE-A-26 55 381. The endless conveyor of the known apparatus is a conveyor band which is made from steel or plastic. The band has at its longitudinal edges intermediate members made of a material with a low friction, which members are in the form of blocks having slits therein, which blocks are screwed, stapled or glued on the band. The support of the conveyor band at the side of the drum is effected with a special spacing band. The spacing band is winded around the drum in a spiral path, whereby the adjacent windings are spaced from each other to form a slit in which the intermediate members of the conveyor band extend. Both the conveyor band and the spacing band are winded around the drum with such tension that the bands will rotate with the drum when the drum is driven for rotation.

In EP 0 128 270, which also discloses a spiral conveyor, the drum is made up of a large number of vertical rods, together forming a cylinder. The vertical rods engage the side of the conveyor chain proximal to the drum. The conveyor chain, which is tensioned around the drum driven by a central shaft, is carried along through friction and thus driven. In connection with cleaning and servicing, the conveyor chain should preferably be made of a corrosion-resistant metal and, of course, so should the drum. In practice, however, the disadvantage of this is that both the drum and the friction-driven conveyor chain are soon damaged due to the metal-on-metal contact between the drum and the conveyor chain. At present, two solutions to this problem are known. The first solution is to design the conveyor chain in plastic. Apart from its high cost price, such a plastic chain is moreover difficult to clean. Further, the chain will be subject to wear through contact with the drum and the chain should regularly be replaced in its entirety, which is very costly. A second known solution is to provide the vertical rods constituting the drum with a plastic layer. A disadvantage of this solution is that it makes the drum very costly. A drum made up of vertical rods is already very costly as it is, let alone a drum made up of vertical rods provided with a plastic coating.

The object of the present invention is to provide a conveyor of the above-described type without the above-mentioned disadvantages and with a minimal cost price.

To that end, the conveyor is characterized by the features of claim 1.

A spiral conveyor of such design provides the advantage that the drum can be manufactured at low cost inasmuch as the sheet material can be simply bent into the form of a cylinder and need only be locally stiffened from the inside of the cylinder by means of a simple frame. The plastic intermediate elements provide sufficient friction between the conveyor chain and the drum and moreover prevent the chain and/or the drum from sustaining an unacceptable degree of wear through erosion. Because the conveyor chain is made of corrosion-free metal, it is simple to clean and moreover highly durable. In addition, a metal conveyor chain can be manufactured at significantly lower cost than a conveyor chain made of plastic. Should the plastic intermediate elements have worn in the course of time, it is only these elements that need to be replaced, whereas the drum and the conveyor chain, since they are not subject to wear, can serve their purpose anew upon replacement of the intermediate elements.

According to a further elaboration of the invention, it is particularly advantageous when the conveyor is characterized by the features of claim 2.

Such a design of the conveyor chain provides the advantage that plastic intermediate elements can simply be slid onto the cross-bar portions extending beyond the side chain. The chain, which is pulled tautly around the drum, normally tends to buckle upwards under the influence of the tensile stress. Because the plastic intermediate elements are located in a plane above the plane in which the tensile stress is exerted on the conveyor chain, the drum exerts on the chain a force which presses the conveyor chain in downward direction and therefore cancels the conveyor chain's tendency to buckle upwards.

Further, the intermediate elements effect a low-noise and calm travel of the conveyor chain.

According to a further elaboration of the invention, *the conveyor is characterized by the features of claim 3.*

A chain of such design has the same contractive capacity as the conveyor chain as described in Dutch patent 165705 (to Gebr.van Capelleveen) and can therefore, at a given bearing surface width, negotiate a bend with a minimal radius. Another advantage is that the plastic intermediate elements in a conveyor chain of such design are located as far as possible above the transport surface of the chain, so that the chain's tendency to buckle upwards under the influence of the tensile stress exerted thereon is counteracted as far as possible by the pressure force exerted on the intermediate elements by the drum.

According to a further elaboration of the invention, it is particularly advantageous when the conveyor is characterized by the features of claim 4.

The supporting guide, which, incidentally, is also present in the known apparatus, ensures that the conveyor chain moves along the spiral path. Because the supporting guide according to the invention supports the conveyor chain at the location of the plastic elements and intermediate elements, the supporting guide can be manufactured simply from metal and can therefore be realized at a low cost price. The supporting guide of the known apparatus supports the metal conveyor chain itself and therefore had to be provided with a plastic guiding surface to prevent excessive wear of the conveyor chain.

Another advantage of the supporting guide according to the present proposal is that it is located outside the bearing surface of the conveyor chain, so that the chances of the supporting guide being contaminated are limited to a minimum.

According to a further elaboration of the invention the conveyor is characterized by the features of claim 5. As a result, the bearing surface is divided into at least two conveying paths extending in the direction of transport. Such a design of the conveyor chain enables at least two products to be arranged on the bearing surface next to each other transverse to the direction of transport, without the necessity of further aligning or guiding means.

In order to make the bearing surface as continuous as possible, it is particularly advantageous when each link of the side chains is connected with at least two cross-bars. This moreover provides the advantage that the plastic intermediate elements and the plastic elements mounted on the side of the conveyor chain remote from the drum, are mounted on two cross-bar ends, so that they are attached more securely.

The invention further relates to a conveyor chain which is evidently intended for the conveyor according to the invention.

The invention further relates to an intermediate element which is evidently intended for the conveyor or conveyor chain according to the invention.

To clarify the invention, one embodiment of the conveyor will be described, by way of example only, with reference to the drawings.
Fig. 1 is a perspective view of an embodiment of the conveyor;
Fig. 2 is a sectional view taken on line II-II of Fig. 3;
Fig. 3 is a partial top plan view of the conveyor chain adjacent the drum; and
Fig. 4 shows an exemplary embodiment of the plastic intermediate element.

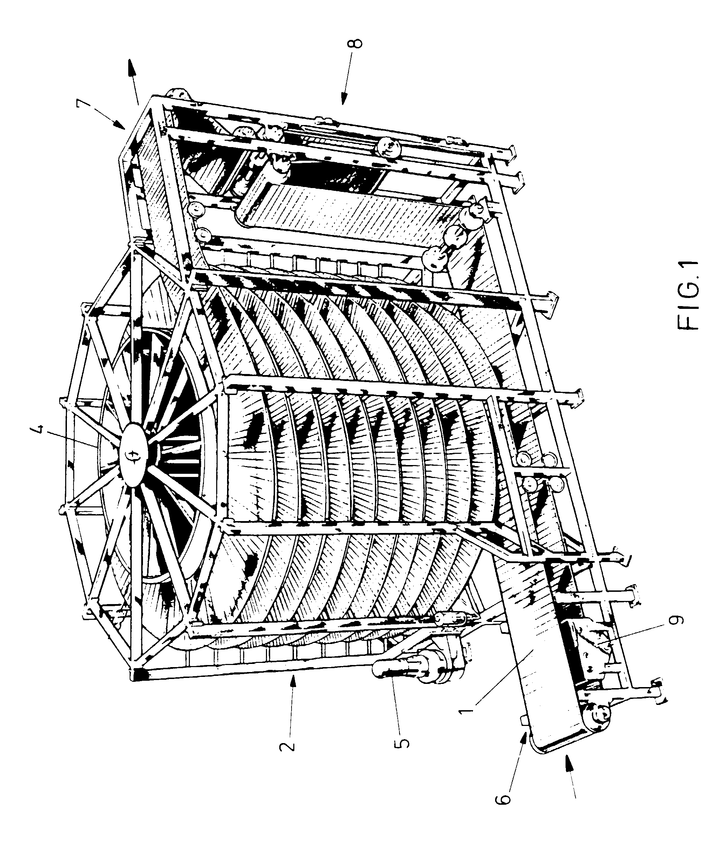

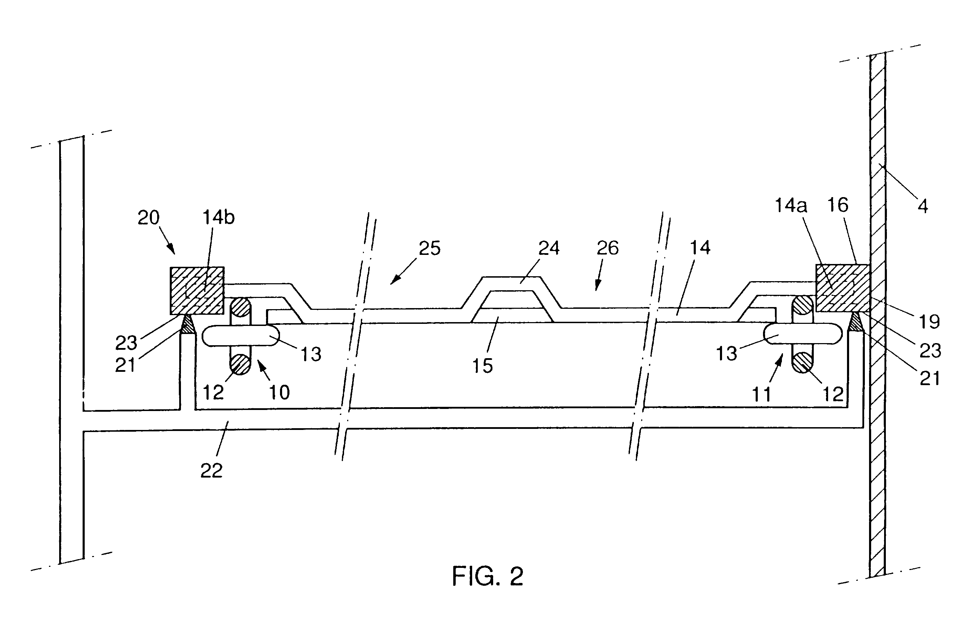

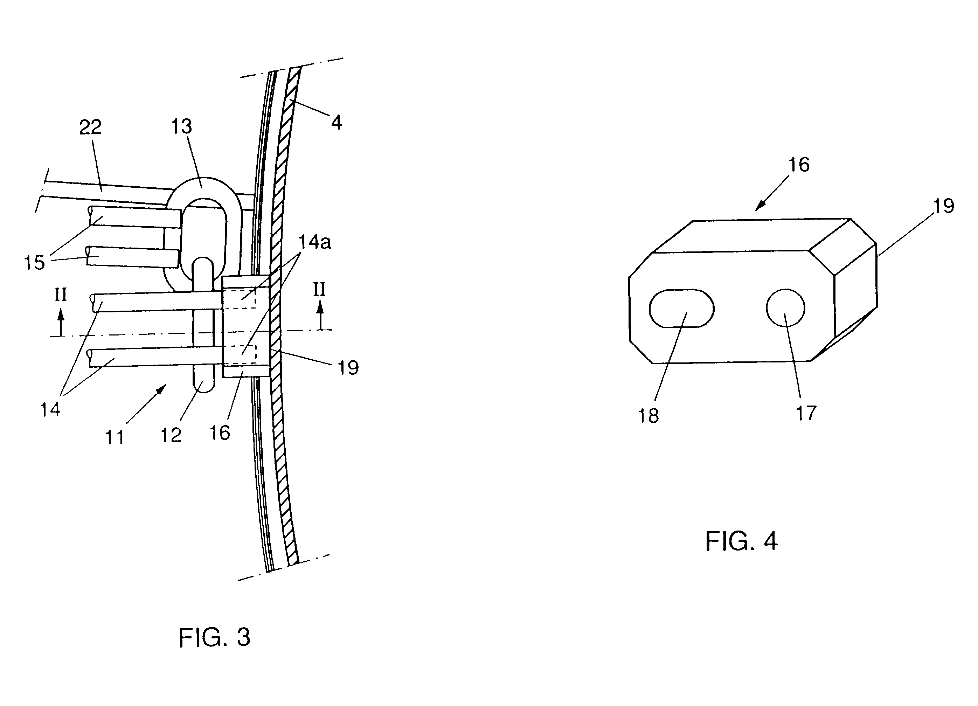

The conveyor comprises an endless conveyor chain 1 which moves along a spiral path 2 through the greater part of its length. In the spiral path 2 the conveyor chain 1 abuts a vertically arranged cylindrical drum 4 drivable for rotation. The drive of the drum is provided by a driving motor 5. The conveyor comprises an infeed end 6 and a discharge end 7 and a tensioning device 8. Optionally, the conveyor can comprise a washing device 9 for cleaning the conveyor chain 1. The conveyor chain 1 is shown schematically in Fig. 1 and in more detail in Figs. 2 and 3. The conveyor chain comprises two side chains 10, 11 of the ship's anchor type, i.e. chains comprising closed interlocking links 12, 13 located in mutually perpendicular planes, which links, by sliding within each other, allow the temporary shortening of the chains 10, 11, for the purpose of negotiating bends. The links 12, 13 of the side chains 9, 10 are connected by cross-bars 14, 15, the links 13, located in a horizontal plane, being connected by cross-bars indicated by the reference numeral 15 and the links 12, located in a vertical plane, being connected by cross-bars indicated by the reference numeral 14.

According to the invention, the conveyor chain 1 is made of a corrosion-free metal, at least the side of the conveyor chain 1 proximal to the drum comprises plastic intermediate elements 16, which abut against the drum 4, and the outer surface 4 of the drum 4 is made of sheet material. For the purpose of assembling the plastic intermediate elements 16, in the present exemplary embodiment the cross-bars 14 which are attached to the top of links 12, located in a vertical plane, are slightly extended. Over the thus formed cross-bar portions 14a, located outside the side chains 10, 11, the plastic intermediate elements 16 have been slid and secured with a clamping fit. Fig. 4 is a perspective view of an exemplary embodiment of a plastic intermediate element 16 provided with a round hole 17 in which a cross-bar end 14a can be received with a clamping fit and a slotted hole 18 in which can be received a second cross-bar end 14a of a cross-bar 14 mounted on the same link 12 located in a vertical plane. A slotted hole 18 has been chosen in order to allow for any variations in the relative distance between two cross-bars 14 mounted on one vertical link 12. The plastic intermediate element 16 further comprises a contact surface 19 through which the intermediate element 16 abuts against the smooth outer surface of drum 4.

According to the invention, the cross-bars 14 which carry the plastic intermediate elements 16 also comprise continuous cross-bar portions 14b on which plastic elements 20 have been mounted at the side chain 10 remote from the drum 4. The conveyor comprises a supporting guide 21, which supports the conveyor chain 1 at the location of the plastic intermediate elements 16 and at the location of the plastic elements 20 on the side of the conveyor chain 1 remote from the drum 4. The supporting guide 21, which is of spiral design and extends around the entire drum, urges the conveyor chain 1 to traverse its spiral path 2 and in the exemplary embodiment shown is carried by a frame 22 arranged outside the drum 4. The plastic elements 20, which in this exemplary embodiment are of the same design as the plastic intermediate elements 16, and the plastic intermediate elements 16 comprise a guiding surface 23 which cooperates with the supporting guide 21.

In the exemplary embodiment shown, the cross-bars 14 and/or 15 comprise an upwardly recessed part 24 which divides the bearing surface of the conveyor chain into two conveying paths 25, 26. Of course, several recessed parts 24 may be provided in each cross-bar 14 and/or 15, so as to form three or more conveying paths.

It will be clear that the invention is not limited to the exemplary embodiment described but various modifications are possible within the framework of the invention.

Essentially, by using the plastic intermediate elements 16 the drum can be manufactured in an inexpensive manner from sheet material and the chain can be manufactured from a corrosion-resistant metal, with all the associated, above-mentioned advantages, without the drum or the conveyor chain being subject to wear.

## Claims

1. A conveyor comprising an endless metal conveyor which for the most part of its length moves along a spiral path and in that path is tensioned around a drivable vertically positioned cylindrical drum made of sheet material, at least the side of the conveyor (1) proximal to the drum (4) comprising intermediate elements (16) which abut against the drum (4) in the spiral path (2), characterized in that the intermediate elements are made of a plastic which provides sufficient friction between the conveyor (1) and the drum (4), the conveyor (1) being a conveyor chain made of a corrosion-free metal, comprising two side chains (10, 11) and cross-bars (14, 15) which connect the side chains (10, 11) and form a bearing surface, the side chains (10, 11) comprise links (12, 13) which, by sliding within each other, allow the temporary shortening of the side chains (10, 11), for the purpose of negotiating bends of the conveyor chain (1).

2. A conveyor according to claim 1, characterized in that, at least a number of the cross-bars (14, 15) are fixed onto the top of the links (12, 13), of which cross-bars at least a number (14) comprise, at least adjacent the side chain (11) proximal to the drum (4), a cross-bar portion (14a) through which they extend slightly beyond the side chain (11) between the drum (4) and said side chain (11), the intermediate elements (16) being mounted on the cross-bar portions (14a) extending beyond the side chain (11), thereby being located above the plane or bearing surface of the conveyor chain (1).

3. A conveyor according to claim 2, characterized in that the side chains (10, 11) are link chains of the ship's anchor type, both the horizontally oriented and the vertically oriented links (13 and 12, respectively) of the two side chains (10, 11) each being interconnected by at least one cross-bar (14, 15), and the cross-bars (14) connected with the vertical links (12) being fixed onto the top of those links (12) and comprising a cross-bar portion (14a) extending beyond the side chain (11) proximal to the drum (4) and on which the plastic intermediate elements (16) are mounted.

4. A conveyor according to claim 2 or 3, characterized in that the cross-bars (14) which carry the plastic intermediate elements (16) comprise, adjacent the side chain (10) remote from the drum (4) as well, continuous cross-bar portions (14b) on which plastic elements (20) are mounted, and the conveyor comprises a supporting guide (21) which supports the conveyor chain (1) at the location of the plastic intermediate elements (16) and at the location of the plastic elements (20) on the side of the conveyor chain (1) remote from the drum (4).

5. A conveyor according to claim 3 or 4, characterized in that at least a number of the cross-bars (14, 15) of the conveyor chain (1) comprise at least one upwardly recessed part (24).

6. A conveyor according to any one of claims 3-5, characterized is that each link (12, 13) of the side chains (10, 11) is connected with at least two cross-bars (14, 15).

7. A conveyor chain evidently intended for a conveyor according to any one of claims 1-6.

8. An intermediate element evidently intended for a conveyor or conveyor chain according to any one of the preceding claims.

## Patentansprüche

1. Förderer mit einem metallischen Endlosförderer, der sich über den größten Teil seiner Länge entlang einem spiralförmigen Weg bewegt und in diesem Weg um eine antreibbare vertikal angeordnete zylindrische Trommel aus einem Bahnmaterial gespannt ist, wobei wenigstens die der Trommel (4) zugewandte Seite des Förderers (1) Zwischenelemente (16) aufweist, die in dem spiralförmigen Weg (2) an der Trommel (4) anliegen, dadurch gekennzeichnet, daß die Zwischenelemente aus einem Kunststoff bestehen, der eine ausreichende Reibung zwischen dem Förderer (1) und der Trommel (4) bietet, wobei der Förderer (1) eine Förderkette aus rostfreiem Material mit zwei Seitenketten (10, 11) und Querstangen (14, 15) ist, welche die Seitenketten (10, 11) verbinden und eine Auflagefläche bilden, wobei die Seitenketten (10, 11) Glieder (12, 13) aufweisen, die durch Gleiten ineinander eine vorübergehende Verkürzung der Seitenketten (10, 11) zur Anpassung an Biegungen der Förderkette (1) ermöglichen.

2. Förderer nach Anspruch 1, dadurch gekennzeichnet, daß wenigstens eine Anzahl der Querstangen (14, 15) auf der Oberseite der Glieder (12, 13) befestigt ist, wobei eine Anzahl (14) dieser Querstangen wenigstens neben der der Trommel (4) benachbarten Seitenkette (11) einen Querstangenbereich (14a) aufweist, mit dem sie sich geringfügig über die Seitenkette (11) zwischen die Trommel (4) und die Seitenkette (11) erstrecken, wobei die Zwischenelemente (16) an den sich über die Seitenkette (11) hinaus erstreckenden Querstangenbereichen (14a) angebracht sind, wodurch sie über der Ebene oder der Auflagefläche der Förderkette (1) angeordnet sind.

3. Förderer nach Anspruch 2, dadurch gekennzeichnet, daß die Seitenketten (10, 11) Gliederketten vom Schiffsankertyp sind, wobei die horizontal als auch die vertikal ausgerichteten Glieder (13 bzw. 12) der beiden Seitenketten (10, 11) jeweils durch wenigstens eine Querstange (14, 15) miteinander verbunden sind, und wobei die mit den vertikalen Gliedern (12) verbundenen Querstangen (14) an der Oberseite dieser Glieder (12) angebracht sind und einen Querstangenbereich (14a) aufweisen, der sich über die der Trommel (4) benachbarte Seitenkette (11) hinaus erstreckt, und auf dem die Kunststoffzwischenelemente (16) angebracht sind.

4. Förderer nach Anspruch 2 oder 3, dadurch gekennzeichnet, daß die Querstangen (14), welche die Kunststoffzwischenelemente (16) tragen, auch nahe der von der Trommel (4) entfernt gelegenen Seitenkette (10) durchgehende Querstangenbereiche (14b) aufweisen, auf denen Kunststoffelemente (20) befestigt sind, und der Förderer eine Stützführung (21) aufweist, die die Förderkette (1) an der Stelle der Kunststoffzwischenelemente (16) und an der Stelle der Kunststoffelemente (20) auf der Seite der von der Trommel (4) entfernt gelegenen Förderkette (1) stützt.

5. Förderer nach Anspruch 3 oder 4, dadurch gekennzeichnet, daß wenigstens eine Anzahl der Querstangen (14, 15) der Förderkette (1) wenigstens einen nach oben ausgenommenen Bereich (24) aufweist.

6. Förderer nach einem der Ansprüche 3-5, dadurch gekennzeichnet, daß jedes Glied (12, 13) der Seitenketten (10, 11) mit wenigstens zwei Querstangen (14, 15) verbunden ist.

7. Förderkette, die augenscheinlich für einen Förderer nach einem der Ansprüche 1-6 bestimmt ist.

8. Zwischenelement, das augenscheinlich für einen Förderer oder eine Förderkette nach einem der vorhergehenden Ansprüche bestimmt ist.

## Revendications

1. Convoyeur comprenant un convoyeur en métal sans fin qui se déplace sur la majeure partie de sa longueur le long d'un trajet en spirale et qui est mis sous tension dans ce trajet autour d'un tambour cylindrique entraîné et positionné verticalement, réalisé d'un matériau en tôle, le côté du convoyeur (1) à proximité du tambour (4) au moins comprenant des éléments intermédiaires (16) qui butent contre le tambour (4) dans le trajet en spirale (2), caractérisé en ce que les éléments intermédiaires sont réalisés d'une matière plastique qui assure une friction suffisante entre le convoyeur (1) et le tambour (4), le convoyeur (1) étant une chaîne de convoyeur réalisée d'un métal sans corrosion, comprenant deux chaînes latérales (10, 11) et des traverses (14, 15) qui connectent les chaînes latérales (10, 11) et qui forment une surface porteuse, les chaînes latérales (10, 11) comprenant des maillons (12, 13) qui, en coulissant les uns dans les autres, permettent le raccourcissement temporaire des chaînes latérales (10, 11), dans le but de négocier des virages de la chaîne de convoyeur (1).

2. Convoyeur seulement la revendication 1, caractérisé en ce qu'au moins un certain nombre des traverses (14, 15) sont fixées sur le sommet des maillons (12, 13), un certain nombre (14) desdites traverses comprenant, au moins en position adjacente à la chaîne latérale (11) à proximité du tambour (4), une partie de traverse (14a) au moyen de laquelle elles s'étendent légèrement au-delà de la chaîne latérale (11) entre le tambour (4) et ladite chaîne latérale (11), les éléments intermédiaires (16) étant montés sur les parties de traverses (14a) qui s'étendent au-delà de la chaîne latérale (11), étant grâce à ceci situés au-dessus du plan ou de la surface porteuse de la chaîne de convoyeur (1).

3. Convoyeur selon la revendication 2, caractérisé en ce que les chaînes latérales (10, 11) sont des chaînes à maillons du type pour ancre de bateau, les maillons, tant orientés horizontalement que orientés verticalement (13 et 12, respectivement) des deux chaînes latérales (10, 11) étant chacun interconnectés par au moins une traverse (14, 15), et les traverses (14) connectées aux maillons verticaux (12) étant fixées sur le sommet de ces maillons (12) et comprenant une partie de traverse (14a) qui s'étend au-delà de la chaîne latérale (11) à proximité du tambour (4) et sur laquelle sont montés les éléments intermédiaires en matière plastique (16).

4. Convoyeur selon l'une ou l'autre des revendications 2 et 3, caractérisé en ce que les traverses (14) qui portent les éléments intermédiaires en matière plastique (16) comprennent, en position adjacente à la chaîne latérale (10) éloignée du tambour (4) également, des parties de traverse continues (14d) sur lesquelles sont montés des éléments en matière plastique (20), et le convoyeur comprend un guide de support (21) qui supporte la chaîne de convoyeur (1), et à l'emplacement des éléments en matière plastique (20) sur le côté de la chaîne de convoyeur (1) éloignée du tambour (4).

5. Convoyeur selon l'une ou l'autre des revendications 3 et 4, caractérisé en ce qu'au moins un certain nombre des traverses (14, 15) de la chaîne de convoyeur (1) comprennent au moins une partie (24) évidée vers le haut.

6. Convoyeur selon l'une quelconque des revendications 3 à 5, caractérisé en ce que chaque maillon (12, 13) des chaînes latérales (10, 11) est connecté à au moins deux traverses (14, 15).

7. Chaîne de convoyeur évidemment destinée pour un convoyeur selon l'une quelconque des revendications 1 à 6.

8. Élément intermédiaire évidemment destiné pour un convoyeur ou une chaîne de convoyeur selon l'une quelconque des revendications précédentes.
